# EUROPÄISCHE PATENTSCHRIFT

(11) **EP 1 007 267 B1**
(45) Veröffentlichungstag und Bekanntmachung des Hinweises auf die Patenterteilung: **22.03.2006**
(21) Anmeldenummer: 98943766.0
(22) Anmeldetag: 22.07.1998
(51) Int. Cl.: B23K 26/00, B23K 26/06

(54) **VERFAHREN UND VORRICHTUNG ZUM SCHWEISSEN MITTELS LASERSTRAHLUNG**
METHOD AND DEVICE FOR LASER BEAM WELDING
PROCEDE ET DISPOSITIF DE SOUDAGE PAR FAISCEAU LASER

(30) Priorität: 01.08.1997 DE 19733371; 19.11.1997 DE 19751195
(43) Veröffentlichungstag der Anmeldung: 14.06.2000
(73) Patentinhaber: Fraunhofer-Gesellschaft zur Förderung der angewandten Forschung e.V., 80686 München (DE)
(72) Erfinder: BONSS, Steffen, D-98544 Zella (DE); STANDFUSS, Jens, D-01796 Pirna (DE); BEYER, Eckhard, D-01474 Weissig (DE)
(74) Vertreter: Pfenning, Meinig & Partner GbR
(86) Internationale Anmeldenummer: PCT/EP1998/004586
(87) Internationale Veröffentlichungsnummer: WO 1999/006173

(56) Entgegenhaltungen:
- EP-A- 0 706 072
- DE-A- 4 234 342
- GB-A- 2 175 737
- US-A- 4 914 268
- PATENT ABSTRACTS OF JAPAN vol. 010, no. 109 (M-472), 23. April 1986 & JP 60 240395 A (MITSUBISHI JUKOGYO KK), 29. November 1985
- PATENT ABSTRACTS OF JAPAN vol. 013, no. 473 (M-884), 26. Oktober 1989 & JP 01 186293 A (NEC CORP), 25. Juli 1989

## Beschreibung

Die Erfindung betrifft ein Verfahren und eine Vorrichtung zum Schweißen mittels Laserstrahlung, das insbesondere zum Tiefschweißen von verschiedensten Werkstoffen geeignet ist.

Aus US 4,914,268 ist ein Schweißverfahren bekannt, bei dem mindestens zwei verschiedene Elektronen- oder Laserstrahlen auf ein zu schweißendes Werkstück gerichtet werden, wobei insbesondere großformatige Teile miteinander verbunden werden sollen. Die zwei bis drei verschiedenen Strahlen sollen, nach der dort beschriebenen Lehre, verschiedene Aufgaben erfüllen. So ist ein erster Strahl zur Herstellung der eigentlichen Schweißverbindung vorgesehen und mit einem zweiten Strahl soll dann eine Glättung der sich an der Oberfläche ausgebildeten Schweißnaht erfolgen und ein dritter Strahl soll die durch den Wärmeeintrag hervorgerufene Gefügeveränderung durch eine Rekristallisation zumindest teilweise rückgängig machen, um unerwünschte Spannungszustände im Nahtbereich zu vermeiden.

Durch den relativ hoch konzentrierten Energieeintrag, der insbesondere beim Tiefschweißen erforderlich ist, gibt es Probleme dadurch, daß sich im stark aufgeheizten Bereich, bis relativ weit in das Werkstück hineinragend, eine Dampfkapillare ausbildet, in der das durch die Erhitzung entstandene Plasma und demzufolge auch gasförmige Komponenten unter erhöhtem Druck stehen, wobei diese am Entweichen aus dem eigentlichen Werkstück dadurch gehindert werden, daß infolge des hohen Energieeintrages in das Werkstück in bezug zu dem Energieeintrag an der Werkstückoberfläche eine relativ kleine Öffnung für die Dampfkapillare gebildet wird und es demzufolge im Inneren des Werkstückes zu Problemen und zu einem unkontrollierten Spritzen aus der Dampfkapillare kommen kann.

Ein weiterer Nachteil sind die durch die großen Temperaturgradienten hervorgerufenen Spannungen, die auch nach dem Schweißen im Werkstoff und dabei insbesondere im Nahtbereich verbleiben. Bedingt durch den Spannungsgradienten und in Abhängigkeit von werkstoffspezifischen Eigenschaften kann es während der Erstarrung bzw. Abkühlung zur Ausbildung von Schweißnahtimperfektion, insbesondere der Ausbildung von Heiß- und/oder Kaltrissen kommen. Zur Verminderung solcher Wärmespannungen ist es üblich, eine entsprechende Temperaturbehandlung durchzuführen, bei der das gesamte Werkstück unter ganz bestimmten, werkstoffspezifischen Temperaturbedingungen erwärmt und wieder abgekühlt wird. Hierfür ist jedoch, wie für eine ebenfalls zur Vermeidung von Wärmespannungen bekannte Vorwärmung des zu schweißenden Werkstückes ein erhöhter Zeit- und insbesondere ein erhöhter Energieaufwand erforderlich, der sich negativ auf die Effektivität und die Kosten niederschlägt.

So ist in JP-A-60-240395, die als besten Stand der Technik gesehen wird, ein Laserschweißverfahren beschrieben, bei dem ein Laserstrahl in zwei Teilstrahlen zerlegt und beide Teilstrahlen auf die Oberfläche eines Werkstückes gerichtet werden. Dabei wird der zweite Teilstrahl mit Hilfe eines konkaven Spiegels entland einer Achse ausgelenkt und über das geschmolzene Metall geführt. Durch diese Hin- und Herbewegung des Teilstrahles soll die Öffnung, der mit dem anderen Teilstrahl erzeugten Dampfkapillare vergrößert und dadurch die Entgasung der Schmelze verbessert werden.

In JP-A-1-1186293 ist ein Laserschweißverfahren beschrieben, bei dem mit ebenfalls zwei Teilstrahlen eines Laserstrahls gearbeitet wird. Hierbei wird ein zweiter Teilstrahl mit unterschiedlicher Fokussierung auf die Oberfläche eines Werkstückes gerichtet, um eine Nacherwärmung der Schmelze zu erzielen.

Es ist daher Aufgabe der Erfindung, eine Möglichkeit vorzugeben, mit dem verschiedenste werkstücke mittels Laserstrahlung, insbesondere tief geschweißt werden können und dabei ein verminderter Arbeitsaufwand, bei gleichzeitig guter Qualität der hergestellten Schweißverbindung erreicht werden kann.

Erfindungsgemäß wird diese Aufgabe mit den Merkmalen des Patentanspruchs 1 für das Verfahren und mit den Merkmalen der Ansprüche 12 und 13 für eine dazu zu verwendende Vorrichtung gelöst. Vorteilhafte Ausgestaltungsformen,und Weiterbildungen der Erfindung ergeben sich bei Nutzung der in den untergeordneten Ansprüchen genannten Merkmale.

Mit der erfindungsgemäßen Lösung wird dann so gearbeitet, daß mit mindestens einem Laserstrahl durch geeignete Strahlformung zwei Bereiche verschiedener Intensität gleichzeitig bestrahlt werden, wobei ein kleiner Bereich mit einer großen Intensität bestrahlt wird und der Laserstrahl so geformt wird, daß sich die maximale Strahlintensität im Werkstück und nicht an dessen Oberfläche auswirkt und ein größerer Bereich mit einer kleineren Intensität auf der Werkstückoberfläche bestrahlt wird. Durch die Bestrahlung mit der großen Intensität bildet sich im Werkstück eine Dampfkapillare, deren Öffnung kelchförmig in der Werkstückoberfläche durch die zweite Bestrahlung mit geringerer Intensität erweitert wird. Der größere Bereich, der mit der kleineren Intensität bestrahlt wird, führt weiterhin vorteilhaft dazu, daß sich die Temperaturgradienten verkleinern und die Abkühlgeschwindigkeit der Schmelze verringert wird, so daß die Wärmespannungen und deren Gradienten im Schweißbereich stark verkleinert werden können und eine thermische Vor- oder Nachbehandlung entfallen kann.

Durch die kelchförmige Öffnung der Dampfkapillare in Richtung zur Werkstückoberfläche können gasförmige Komponenten, die aus diesem Bereich entweichen wollen, ungehindert austreten und es kommt zu keinen Stauungen und Spritzern. Außerdem werden dadurch Werkstofftrennungen im Nahtbereich vermieden, die durch in die erstarrende Schmelze oder eingeschlossene Gasblasen ansonsten auftreten können. Die kelchförmige Öffnung der Dampfkapillare und die sich daraus ergebende Form des die Kapillare umgebenden Schmelzbades können zu einer Vermeidung von Prozeßinstabilitäten beim Tiefschweißen mit hohen Schweißgeschwindigkeiten (Humping-Effekt) führen.

Für die Durchführung des erfindungsgemäßen Verfahrens bestehen prinzipiell zwei Möglichkeiten. Dabei kann einmal ein Laserstrahl einer Laserstrahlquelle in zwei verschiedene Teilstrahlen aufgeteilt werden. Die beiden Teilstrahlen können dann unterschiedlich geformt und aufgeweitet werden und treffen dann in überlagerter Form auf das Werkstück auf.

Eine zweite Möglichkeit besteht darin, mindestens zwei Laserstrahlquellen zu verwenden, deren jeweilige Laserstrahlen unterschiedlich fokussiert und mit unterschiedlichen Intensitäten auf bzw. in dem Werkstück wirken. Hierfür können bereits Laserstrahlquellen mit unterschiedlichen Ausgangsleistungen verwendet werden, wobei die Laserstrahlquelle, die den Laserstrahl zur Ausbildung der Dampfkapillare auf das Werkzeug richtet, auch die höhere Ausgangsleistung hat. Es kann beispielsweise hierfür ein CO₂-Laser oder ein NdYAG-Laser verwendet werden, dessen Strahl mit einer Strahlformungseinheit so fokussiert wird, daß sich das Intensitätsmaximum im Werkstück ergibt. Der zweite Laser kann ein Hochleistungsdiodenlaser sein, der eine Ausgangsleistung von ca. 1 kW oder darüber haben kann.

Bei dem erfindungsgemäßen Verfahren kann vorteilhaft so gearbeitet werden, daß werkstoffspezifisch oder während des eigentlichen Schweißens die Lage des Bereiches, der mit der größeren Intensität beaufschlagt wird, in bezug zu dem anderen Bereich, der mit der geringeren Intensität bestrahlt wird, variiert werden kann. So kann die Dampfkapillare beispielsweise in einem außermittig angeordneten Bereich, innerhalb des diesen Bereich umgebenden Bereiches, der mit der geringeren Intensität bestrahlt wird, ausgebildet werden, wenn der hierfür verwendete Laserstrahl entsprechend ausgerichtet wird.

Günstig kann es außerdem sein, wenn die Flächengrö-Benverhältnisse der beiden verschiedenen Bereiche, z.B. durch geänderte Strahlformung, beispielsweise unter Berücksichtigung des zu schweißenden Werkstoffes, eingestellt werden können. Dies kann insbesondere vorteilhaft sein, wenn die verschiedenen Wärmeleitfähigkeiten der jeweiligen Werkstoffe der zu schweißenden Werkstücke berücksichtigt werden.

Es kann aber auch die Intensität der Laserstrahlung durch Regelung oder Steuerung der Laserleistung verändert werden. Dabei kann einmal die Veränderung unter Berücksichtigung des zu schweißenden Werkstoffes erfolgen und zum anderen besteht die Möglichkeit, die Laserleistung während des Schweißprozesses zu regeln. Eine solche Regelung kann günstigerweise in Verbindung mit einer Temperaturmessung erfolgen, wobei günstigerweise die Temperaturverteilung zumindest im geschmolzenen Bereich gemessen wird. Die Temperaturmessung sollte berührungslos erfolgen, wobei mehrere örtlich voneinander getrennte einzelne Temperatursensoren oder ein entsprechend ausgebildetes Array verwendet werden können. Zur Temperaturmessung können aber auch das bekannte Verfahren der Thermovision ausgenutzt werden. Die Regelung der Intensität, mit der das Werkstück mit den verschiedenen Laserstrahlen oder Teilstrahlen bestrahlt wird, kann vorteilhaft für jeden einzelnen Strahl gesondert variiert werden.

Eine weitere Möglichkeit zur Beeinflussung während der Durchführung des erfindungsgemäßen Verfahrens besteht darin, daß die Lage und/oder die Ausrichtung der einzelnen Laserstrahlen oder der Teilstrahlen eines Laserstrahles, durch Bewegung der Laserstrahlquellen oder Spiegeln, zueinander verändert werden. Beispielsweise der bzw. die Laserstrahlen, die den Bereich der geringeren Intensität bestrahlen sollen, geneigt auf die Werkstoffoberfläche gerichtet und eine von der Kreisform abweichende Fläche auf der Werkstückoberfläche bestrahlt wird, wobei eine ellipsenähnliche Fläche, deren längere Längsachse in Richtung der Schweißnaht zeigt, ausgebildet wird. Für bestimmte Anordnungen kann es aber auch günstig sein, eine um 90° dazu gedrehte flächige Ausbildung zu erhalten, wobei so ein breiterer Randnahtbereich erwärmt werden kann.

Die im Werkstück erreichbaren Temperaturen können aber auch durch Veränderung der jeweiligen Fokussierungen der einzelnen Laserstrahlen beeinflußt werden.

In einer vorteilhaften Ausführungsform, eines Beispieles für eine erfindungsgemäße Vorrichtung, bei der zwei verschiedene Laserstrahlquellen verwendet werden, wobei es sich bei einer der Laserstrahlquellen um herkömmliche CO₂-Laser oder NdYAG-Laser handeln kann und die zweite Laserstrahlquelle ein Hochleistungsdiodenlaser ist, kann der Hochleistungsdiodenlaser in die Strahlformungseinheit der ersten Laserstrahlquelle integriert sein, was zur Verringerung der erforderlichen Baugröße der Vorrichtung führt.

Eine weitere Möglichkeit einer für die Erfindung zu verwendenden Vorrichtung mit zwei Laserstrahlquellen besteht darin, daß die aus den einzelnen Emittern eines Diodenlasers austretenden Teilstrahlen in Lichtleitfasern eingekoppelt werden und über die Lichtleitfasern gezielt, örtlich verteilt auf die Oberfläche des Werkstückes gerichtet werden können. Dies führt zu einer höheren Flexibilität bei der Anordnung des Diodenlasers, da die z.Zt. erhältlichen Diodenlaser in einem stark begrenzten kleinen Abstand zum Werkstück angeordnet werden müssen und es bei kompliziert strukturierten Werkstücken dadurch zu Problemen kommen kann.

Zur Vergrößerung des Abstandes zwischen dem Diodenlaser und dem Werkstück, kann der aus dem Diodenlaser austretende Laserstrahl auch durch einen gegenüber herkömmlichen Lichtleitfasern relativ groß dimensionierten Lichtleiter, beispielsweise ein an der Außenfläche mit einer reflektierenden Beschichtung versehener zylinderförmiger Körper gerichtet werden, über den der Laserstrahl dann über eine größere Entfernung und bevorzugt über eine weitere Linse auf die Werkstückoberfläche gerichtet werden kann.

Mit der Erfindung können auch bereits vorhandene Laserstrahlschweißanlagen nachgerüstet werden, in dem im einfachsten Falle zusätzlich ein Hochleistungsdiodenlaser an eine solche Laserschweißanlage adaptiert wird.

Nachfolgend soll die Erfindung beispielhaft beschrieben werden.

Dabei zeigen:
- Figur 1: die Intensitätsverteilung der Laserstrahlung, die mit der Erfindung erreicht werden kann;
- Figur 2: den schematischen Aufbau, der beim herkömmlichen Laserstrahlschweißen verwendet wird und zwei Ansichten, des damit beeinflußten Werkstückbereiches;
- Figur 3: den schematischen Aufbau eines Beispiels einer erfindungsgemäßen Vorrichtung mit zwei Laserstrahlquellen und die entsprechenden Ansichten nach Figur 2, die mit den veränderten Strahlungsintensitäten erreicht werden können und
- Figur 4: ein Beispiel einer erfindungsgemäßen Vorrichtung in zwei Ansichten.

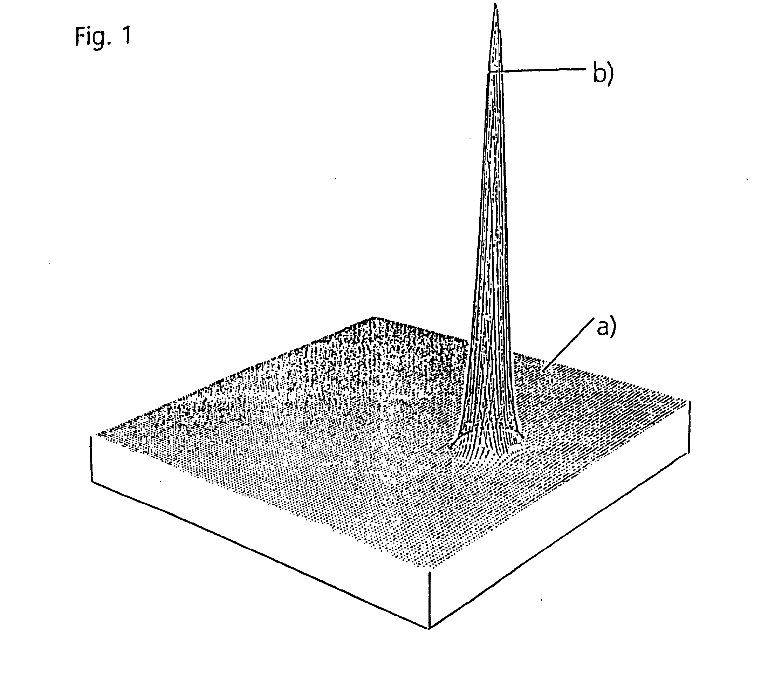

In der Figur 1 ist diagrammartig die Intensitätsverteilung der Laserstrahlung, wie sie mit der Erfindung erreicht werden kann, dargestellt. Es ist eindeutig erkennbar, daß ein kleiner stark konzentrierter Bereich ausgehend vom Intensitätsplateau a eine starke Überhöhung b aufweist, mit der die im Werkstück gewünschte Ausbildung der Dampfkapillare erreicht werden kann und ein verbessertes Tiefschweißen möglich wird.

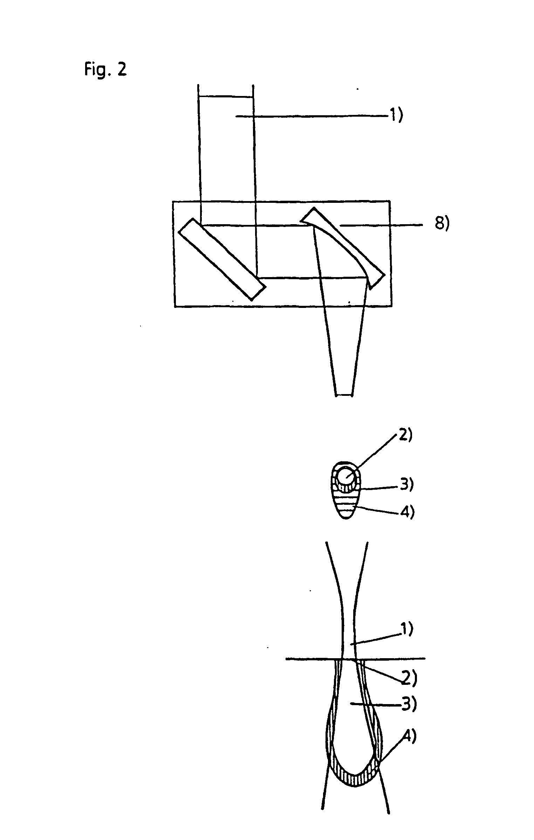

In der Figur 2 ist eine herkömmliche Anordnung als Prinzip wiedergegeben, dabei wird der Laserstrahl 1 einer einzigen Laserstrahlquelle über eine Strahlformungseinheit 8 auf die Oberfläche eines Werkstückes gerichtet. In der Strahlformungseinheit 8 wird eine Fokussierung des Laserstrahles 1 erreicht.

Die in der Mitte der Figur 2 erkennbare Darstellung zeigt den Einflußbereich des Laserstrahles 1 auf der Oberfläche des Werkstückes mit dem Fokus 2 des Laserstrahles 1, der Dampfkapillare 3 und dem eiförmigovalen Schmelzbad 4, das um den Fokus 2 des Laserstrahles 1 ausgebildet wird.

In der unteren Darstellung der Figur 2 ist dann ein Schnitt durch das Werkstück erkennbar. Dabei weist die gebildete Dampfkapillare 3 eine in Richtung auf die Oberfläche des Werkstückes weisende Verengung auf und es ist weiter deutlich zu sehen, daß die Dampfkapillare 3 vom Schmelzbad 4 auch im Inneren des Werkstückes umschlossen ist.

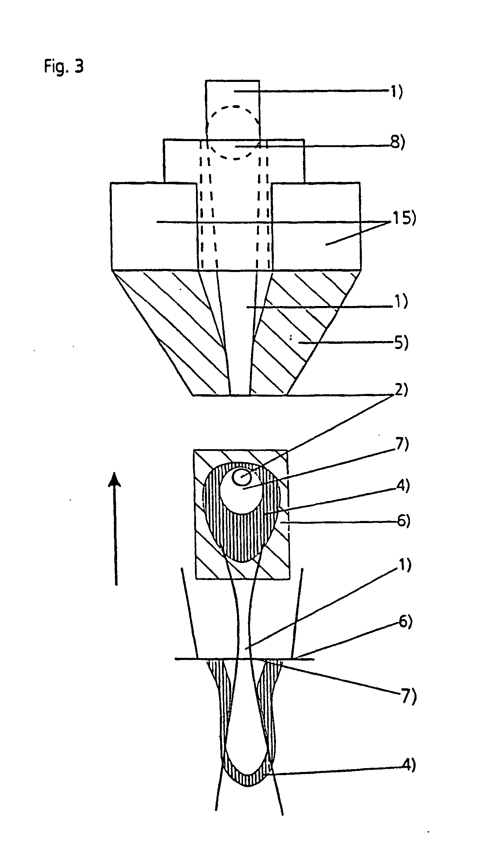

In der Figur 3 ist in der oberen Darstellung ein Beispiel einer erfindungsgemäßen Vorrichtung schematisch gezeigt.

Dabei wird ein Laserstrahl 1 einer herkömmlichen Laserstrahlquelle über eine Strahlformungseinheit 8, wie sie beispielsweise auch nach dem Stand der Technik verwendet werden kann, auch auf die Oberfläche des Werkstückes gerichtet.

An bzw. um die Strahlformungseinheit 8 ist ein Hochleistungsdiodenlaser angeordnet, dessen Laserstrahlen 5 den Laserstrahl 1 überlagern und mit dem ein wesentlich größerer flächiger Bereich auf der Oberfläche des Werkstückes bestrahlt wird.

In der mittleren Darstellung, der Figur 3, ist wieder der bestrahlte Bereich der Werkstückoberfläche dargestellt und sowohl der Fokus 2 des Laserstrahles 1 und der Fokus 6 des Laserstrahles 5 erkennbar. Der Fokus 2 des Laserstrahles 1 ist außermittig des Fokus 6 des Laserstrahles 5 ausgebildet, wobei er bevorzugt in Schweißrichtung, entsprechend dem dargestellten Pfeil verschoben ist. In dieser Darstellung ist außerdem deutlich erkennbar, daß ein wesentlich größerer Bereich 4 geschmolzen ist und auch die Öffnung der Dampfkapillare 7 an der Oberfläche des Werkstückes wesentlich größer ist. Dieser Sachverhalt wird in der unteren Darstellung der Figur 3 nochmals deutlicher, wobei hier zusätzlich die kelchartige Erweiterung in Richtung zur Oberfläche des Werkstückes der Öffnung der Dampfkapillare 7 eindeutig zu erkennen ist.

Die Form des Fokus 6 des Laserstrahles 5, wird durch eine in bezug zur Werkstoffoberfläche geneigte Strahlrichtung des Laserstrahles 5 erhalten. In den größeren Einflußbereich, entgegengesetzt zur Schweißrichtung, kann das Schmelzbad zumindest im oberflächennahen Bereich erwärmt gehalten werden und dadurch die Erstarrungsgeschwindigkeit durch Verringerung der Abkühlgeschwindigkeit verlangsamt werden.

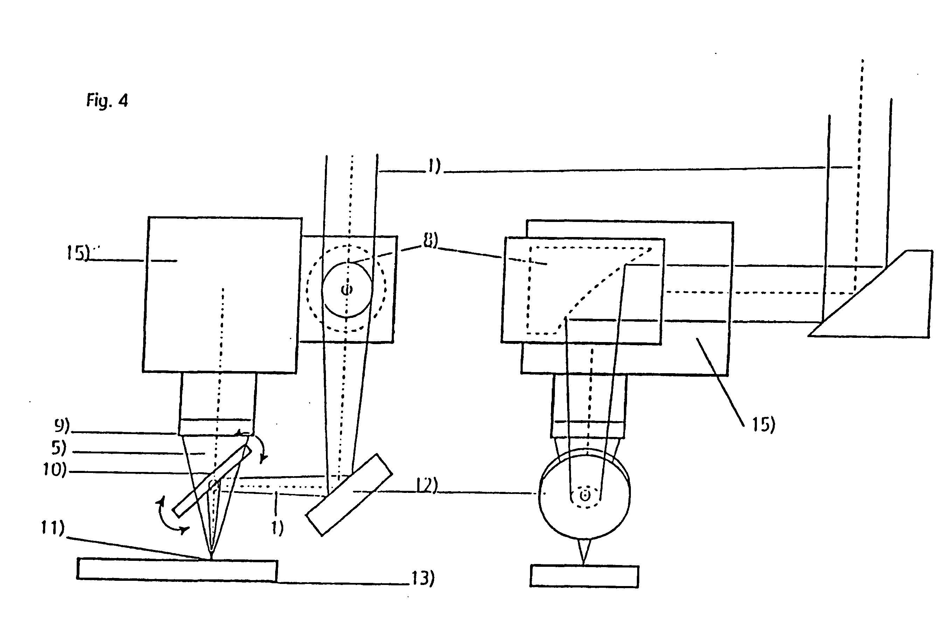

In der Figur 4 ist ein weiteres Beispiel einer erfindungsgemäßen Vorrichtung dargestellt. Dabei wird ein herkömmlicher Laser, dessen Laserstrahl 1 über eine bereits erwähnte Strahlformungseinheit 8 und zwei Spiegel 10 und 12 auf den Bearbeitungsort 11 des Werkstückes 13 gerichtet.

Zusätzlich wird ein Hochleistungsdiodenlaser 15 mit einer entsprechenden Optik 9 zur Strahlformung verwendet, dessen Laserstrahl 5 den Laserstrahl 1 überlagert.

In der Figur 4 ist mit jeweils zwei Doppelpfeilen deutlich gemacht, daß der Spiegel 10, der für den Fall, daß er für den Laserstrahl 1 reflektierend und für den Laserstrahl 5 durchlässig ist, direkt im Strahlengang des Laserstrahls 5 angeordnet werden kann, zumindestens um eine Achse drehbar ist. Beim Verschwenken des Spiegels 10 kann der Auftreffort des Laserstrahles 1 auf der Oberfläche des Werkstückes 13 und auch die Größe des Fokus 2 verändert werden.

Wird ein für ein für den Laserstrahl 5 undurchlässiger Spiegel 10 verwendet, so muß der Laserstrahl 5 in einem Winkel geneigt auf die Oberfläche des Werkstückes 13 gerichtet werden, dabei muß ein Winkel eingehalten werden, der sichert, daß der Laserstrahl 5 ungehindert vom Spiegel 10 auf die Oberfläche des Werkstückes 13 auftreffen kann.

## Patentansprüche

1. Verfahren zum Schweißen mittels Laserstrahlung, bei dem im Werkstück eine Dampfkapillare mit erweiterter Öffnung, unter Verwendung zweier Laserstrahlen (1, 5) oder zwei Teilstrahlen eines Laserstrahls ausgebildet wird,
**dadurch gekennzeichnet,**
**daß** durch Strahlformung die Intensität der Laserstrahlung mit Intensitätsmaximum im Werkstück (13) zur Ausbildung der kelchförmig erweiterten Dampfkapillare (7) erhöht und ein weiterer, größerer angrenzender Bereich auf der Werkstückoberfläche mit kleinerer Laserintensität bestrahlt wird.

2. Verfahren nach Anspruch 1,
**dadurch gekennzeichnet,**
**daß** ein Laserstrahl in zwei Teilstrahlen aufgeteilt und einer der beiden Teilstrahlen aufgeweitet geformt und dem zweiten Teilstrahl überlagert wird, so daß der aufgeweitete und geformte Teilstrahl den Bereich mit der kleineren Intensität bestrahlt.

3. Verfahren nach Anspruch 1,
**dadurch gekennzeichnet, daß** Laserstrahlen (1, 5) mindestens zweier Laserstrahlquellen mit unterschiedlicher Fokussierung und Intensitäten auf das Werkstück (13) gerichtet werden.

4. Verfahren nach einem der Ansprüche 1 bis 3,
**dadurch gekennzeichnet, daß** die Lokalisierung des Bereiches mit größerer Intensität und/oder dessen Fläche in bezug zu dem Bereich mit kleinerer Intensität verändert wird.

5. Verfahren nach einem der Ansprüche 1 bis 4,
**dadurch gekennzeichnet, daß** die Intensität der Laserstrahlung variiert wird.

6. Verfahren nach Anspruch 5,
**dadurch gekennzeichnet, daß** die Intensität des Laserstrahles oder Teilstrahles zur Ausbildung der Dampfkapillare variiert wird.

7. Verfahren nach einem der Ansprüche 1 bis 6,
**dadurch gekennzeichnet, daß** die Lage und/oder Ausrichtung der Laserstrahlen (1, 5) oder Teilstrahlen zueinander variiert wird.

8. Verfahren nach Anspruch 7,
**dadurch gekennzeichnet, daß** die Lage und/oder Ausrichtung temperaturabhängig variiert wird.

9. Verfahren nach einem der Ansprüche 1 bis 8,
**dadurch gekennzeichnet, daß** die Intensität der Laserstrahlen (1, 5) oder Teilstrahlen temperaturabhängig geregelt wird.

10. Verfahren nach einem der Ansprüche 1 bis 9,
**dadurch gekennzeichnet, daß** die Fokussierung der Laserstrahlen (1, 5) oder Teilstrahlen variiert wird.

11. Verfahren nach einem der Ansprüche 1 bis 10,
**dadurch gekennzeichnet, daß** die Laserleistung der Laserstrahlung werkstoff- und/oder temperaturabhängig gesteuert oder geregelt wird.

12. Vorrichtung zur Durchführung des Verfahrens nach Anspruch 1, wobei ein Laserstrahl (1) einer Laserstrahlquelle auf einen Strahlteiler gerichtet ist, der den Laserstrahl (1) in einen ersten und einen zweiten Teilstrahl teilt, die beiden Teilstrahlen auf zwei Strahlformungseinheiten gerichtet sind; wobei der erste Teilstrahl fokussiert auf das Werkstück (13) gerichtet ist und der zweite defokussierte Teilstrahl, den ersten Teilstrahl überlagernd auf das Werkstück gerichtet ist, **dadurch gekennzeichnet, daß** mindestens ein Temperatursensor zur Messung der Temperaturverteilung auf dem Werkstück (13) vorhanden und mit einer die Laserstrahlquellen (15) und/oder die Strahlformungseinheiten (8) regelnden Steuerung verbunden ist.

13. Vorrichtung zur Durchführung des Verfahrens nach Anspruch 1, wobei zwei Laserstrahlen (1, 5) zweier Laserstrahlquellen (15) mit unterschiedlicher Intensität auf das Werkstück (13) gerichtet sind, **dadurch gekennzeichnet, daß** mindestens ein Temperatursensor zur Messung der Temperaturverteilung auf dem Werkstück (13) vorhanden und mit einer die Laserstrahlquellen (15) und/oder die Strahlformungseinheiten (8) regelnden Steuerung verbunden ist.

## Claims

1. Method of laser-beam welding in which a steam capillary with a widened opening is formed in the workpiece using two laser beams (1, 5) or two partial beams of one laser beam, **characterized in that** the intensity of the laser radiation is increased by beam-shaping with maximum intensity in the workpiece (13) for forming the steam capillary (7) widened in a bell-shaped manner, and a further, larger adjacent area on the workpiece surface is irradiated with lesser laser intensity.

2. Method according to Claim 1, **characterized in that** a laser beam is split into two partial beams and one of the two partial beams is shaped such that it is widened and is superposed on the second partial beam, so that the widened and shaped partial beam irradiates the area with the lesser intensity.

3. Method according to Claim 1, **characterized in that** laser beams (1, 5) of at least two laser-beam sources are directed with different focusing and intensities onto the workpiece (13).

4. Method according to one of Claims 1 to 3, **characterized in that** the localization of the area with greater intensity and/or its surface area is changed in relation to the area with lesser intensity.

5. Method according to one of Claims 1 to 4, **characterized in that** the intensity of the laser radiation is varied.

6. Method according to Claim 5, **characterized in that** the intensity of the laser beam or partial beam for forming the steam capillary is varied.

7. Method according to one of Claims 1 to 6, **characterized in that** the position and/or alignment of the laser beams (1, 5) or partial beams in relation to one another is varied.

8. Method according to Claim 7, **characterized in that** the position and/or alignment is varied temperature-dependently.

9. Method according to one of Claims 1 to 8, **characterized in that** the intensity of the laser beams (1, 5) or partial beams is regulated-temperature-dependently.

10. Method according to one of Claims 1 to 9, **characterized in that** the focusing of the laser beams (1, 5) or partial beams is varied.

11. Method according to one of Claims 1 to 10, **characterized in that** the laser power of the laser radiation is controlled or regulated material-and/or temperature-dependently.

12. Device for carrying out the method according to Claim 1, wherein a laser beam (1) of a laser-beam source being directed onto a beam splitter, which splits the laser beam (1) into a first and a second partial beam, the two partial beams are directed at two beam-shaping units; the first partial beam being directed in a focused manner onto the workpiece (13) and the second, defocused partial beam, superposing the first partial beam, being directed onto the workpiece, **characterized in that** at least one temperature sensor for measuring the temperature distribution on the workpiece (13) is present and is connected to a control system regulating the laser beam sources (15) and/or the beam-shaping units (8).

13. Device for carrying out the method according to Claim 1, two laser beams (1, 2) of two laser beam sources (15) being directed with different intensities onto the workpiece (13), **characterized in that** at least one temperature sensor for measuring the temperature distribution on the workpiece (13) is present and is connected to a control system regulating the laser beam sources (15) and/or the beam-shaping units (8).

## Revendications

1. Procédé pour le soudage par rayonnement laser, dans lequel un élément capillaire de vapeur avec ouverture élargie est formé dans la pièce d'oeuvre en utilisant deux faisceaux lasers (1, 5) ou deux faisceaux partiels d'un faisceau laser,
**caractérisé en ce que**,
l'intensité du rayonnement laser avec un maximum d'intensité dans la pièce d'oeuvre (13) est augmentée par la conformation du faisceau pour la réalisation de l'élément capillaire de vapeur (7) élargi en forme de coupe et une autre zone plus grande et contiguë est irradiée sur la surface de la pièce d'oeuvre avec une intensité de laser plus faible.

2. Procédé selon la revendication 1,
**caractérisé en ce que**,
un faisceau laser est subdivisé en deux faisceaux partiels et l'un des deux faisceaux partiels est formé de façon élargie et superposé au second faisceau partiel, de sorte que le faisceau partiel élargi et formé irradie la zone avec l'intensité plus faible.

3. Procédé selon la revendication 1,
**caractérisé en ce que** des faisceaux lasers (1, 5) d'au moins deux sources de faisceau laser sont dirigés sur la pièce d'oeuvre (13) avec une focalisation et des intensités différentes.

4. Procédé selon l'une quelconque des revendications 1 à 3,
**caractérisé en ce que** la localisation de la zone avec la plus grande intensité et/ou sa surface est modifiée par rapport à la zone avec l'intensité plus faible.

5. Procédé selon l'une quelconque des revendications 1 à 4,
**caractérisé en ce que** l'intensité du rayonnement laser est modifiée.

6. Procédé selon la revendication 5,
**caractérisé en ce que** l'intensité du faisceau laser ou du faisceau partiel est modifiée pour réaliser l'élément capillaire de vapeur.

7. Procédé selon l'une quelconque des revendications 1 à 6,
**caractérisé en ce que** la position et/ou l'orientation des faisceaux lasers (1, 5) ou des faisceaux partiels est/sont modifiée(s) l'un par rapport à l'autre.

8. Procédé selon la revendication 7,
**caractérisé en ce que** la position et/ou l'orientation est/sont modifiées en fonction de la température.

9. Procédé selon l'une quelconque des revendications 1 à 8,
**caractérisé en ce que** l'intensité des faisceaux lasers (1, 5) ou faisceaux partiels est régulée en fonction de la température.

10. Procédé selon l'une quelconque des revendications 1 à 9,
**caractérisé en ce que** la concentration des faisceaux laser (1, 5) ou faisceaux partiels est modifiée.

11. Procédé selon l'une quelconque des revendications 1 à 10,
**caractérisé en ce que** la puissance du laser du rayonnement laser est commandée ou régulée en fonction du matériau et/ou de la température.

12. Dispositif pour la mise en oeuvre du procédé selon la revendication 1,
dans lequel un faisceau laser (1) d'une source de faisceau laser est orienté sur un diviseur de faisceau, lequel divise le faisceau laser (1) en un premier et un second faisceaux partiels, les deux faisceaux partiels étant dirigés sur deux unités de conformation de faisceau ; le premier faisceau partiel étant dirigé de façon focalisée sur la pièce d'oeuvre (13) et le second faisceau partiel défocalisé étant dirigé sur la pièce d'oeuvre en superposition avec le premier faisceau partiel, **caractérisé en ce qu'**au moins un capteur de température est présent pour la mesure de la répartition de température sur la pièce d'oeuvre (13) et est relié à une commande réglant les sources de faisceau laser (15) et/ou les unités de conformation de faisceau (8).

13. Dispositif pour la mise en oeuvre du procédé selon la revendication 1,
dans lequel deux faisceaux lasers (1, 5) de deux sources de faisceau laser (15) sont dirigés avec une intensité différente sur la pièce d'oeuvre (13), **caractérisé en ce qu'**au moins un capteur de température est présent pour la mesure de la répartition de température sur la pièce d'oeuvre (13) et est relié à une commande réglant les sources de faisceau laser (15) et/ou les unités de conformation de faisceau (8).
